(19) Europäisches Patentamt
European Patent Office
Office européen des brevets

(11) Veröffentlichungsnummer: **0 360 758 B1**

# (12) EUROPÄISCHE PATENTSCHRIFT

(45) Veröffentlichungstag der Patentschrift: **01.02.95**

(21) Anmeldenummer: **89810706.5**

(22) Anmeldetag: **19.09.89**

(51) Int. Cl.⁶: $B29C\ 41/04$, B29C 70/00, F16L 9/12, //B29K67/00, B29L23/00,B29L31/24

(54) **Verfahren zur Herstellung von Rohrleitungsteilen aus Kunststoff, anorganischem Füllstoff und Glasfasern im Schleuderguss-Verfahren sowie ein nach diesem Verfahren hergestelltes Rohrleitungsteil.**

(30) Priorität: **23.09.88 CH 3542/88**

(43) Veröffentlichungstag der Anmeldung:
**28.03.90 Patentblatt 90/13**

(45) Bekanntmachung des Hinweises auf die Patenterteilung:
**01.02.95 Patentblatt 95/05**

(84) Benannte Vertragsstaaten:
**AT BE CH DE ES FR GB IT LI NL SE**

(56) Entgegenhaltungen:
EP-A- 0 158 631    WO-A-86/05436
DE-A- 2 546 391    DE-U- 8 515 454
FR-A- 2 356 866    US-A- 3 483 896

(73) Patentinhaber: **Hobas Engineering AG**
**Birsigstrasse 2**
**CH-4054 Basel (CH)**

(72) Erfinder: **Carlström, Börge**
**Im Thal 1**
**CH-4104 Oberwil (CH)**

(74) Vertreter: **Eder, Carl E. et al**
**Patentanwaltsbüro EDER AG**
**Lindenhofstrasse 40**
**CH-4052 Basel (CH)**

EP 0 360 758 B1

**Beschreibung**

Gegenstand der Erfindung ist ein Verfahren zur Herstellung von mehrschichtigen Rohrleitungsteilen, d.h. von Rohren und Kupplungen, aus Kunststoff, anorganischem Füllstoff und Glasfasern im Schleuderguss-Verfahren. Bei einem aus der WO-A-86/05436 bekannten Verfahren wird die gesamte Menge oder mindestens ein wesentlicher Teil des Kunststoffes anfänglich im flüssigen oder geschmolzenen Zustand in eine sich drehende Form eingebracht. Anschliessend werden schrittweise Füllstoffe oder Verstärkungsmaterial in Form von Fasern und/oder Füllstoff der zylindrischen Form zugeführt, wobei es für den Erfolg wesentlich ist, dass man die gesamte Menge oder zumindest einen wesentlichen Teil des Kunststoffes anfangs in die Form einbringt und anschliessend Füll- und/oder Verstärkungsmaterial darin dispergiert. Insbesondere sollen die als Verstärkungsmaterial dienenden Glasfasern in der inneren und der äusseren Zone untergebracht werden, die durch eine relativ dicke Mittelschicht aus Füllstoff und Harz voneinander getrennt sind, wodurch ein Rohr mit drei Schichten gebildet wird. Die separate Zuführung der einzelnen Rohrwandbestandteile hat aber in der Praxis zu verschiedenen Nachteilen geführt. Besonders bei Rohrleitungen mit relativ kleinem Durchmesser und entsprechend kleiner Wanddicke lassen sich die glasfaserverstärkten Schichten nicht dicht genug herstellen um die Dichtigkeit der Rohrleitung zu gewährleisten und zudem ist der Glasbedarf relativ hoch.

Zur Vermeidung dieser Nachteile wird deshalb erfindungsgemäss ein Verfahren zur Herstellung von mehrschichtigen Rohrleitungsteilen aus Kunststoff, anorganischem Füllstoff und Glasfasern im Schleudderguß-Verfahren gemäß Anspruch 1 vorgeschlagen. Mit diesem Verfahren ist es einerseits möglich, unabhängig vom Rohrleitungsdurchmesser und damit unabhängig von der Dicke bzw. der Lage der einzelnen Schichten in jeder dieser Schichten den für den jeweiligen Verwendungszweck bestmöglichen Gehalt an Füllstoff bzw. Glas zu erzielen, und andererseits ist es auch möglich, die Schichten dadurch unlösbar miteinander zu verbinden, dass sie ineinander übergehen. Dies wird erfindungsgemäss dadurch erreicht, dass zur Bildung der einzelnen miteinander unlösbar verbundenen Schichten eine fliessfähige Mischung aus feinkörnigem, pulverförmigem Füllstoff und Harz in einem Gewichtsverhältnis grösser als 1:2 einer rotierenden Matrize zugeführt und durch Steuerung der Matrizendrehzahl während einer vorbestimmten Zeit in der sich bildenden Schicht eine vorbestimmte Entmischung von Harz und Füllstoff erzeugt wird, wonach der mit vorbestimmter Drehzahl rotierenden Matrize Glasfasern so zugeführt werden, dass diese wenigstens in die innere, durch die Entmischung harzreicher gewordene Schichtpartie eindringen, worauf dieser Vorgang mindestens einmal wiederholt wird.

Je nach Bedarf lassen sich so mehrere von aussen nach innen aufeinander folgende Schichten erzeugen, wobei Menge und Mischungsverhältnis der jeweils zugeführten Mischung, die Art des Füllstoffs, die Drehzahl der Matrize, Menge und Grösse der zugeführten Glasfasern sowie die Bildungszeit für die einzelnen Schichten der Art und Grösse des herzustellenden Rohrleitungsteils angepasst werden können. Dabei haben Versuche einwandfrei gezeigt, dass Festigkeit und Dichtigkeit der hergestellten Rohrteile schon bei geringerer Wandstärke und mit weniger teurem Glas gegenüber bekannten Rohren erheblich verbessert werden können.

Anhand der Zeichnung sind im folgenden einige Beispiele des erfindungsgemässen Verfahrens näher beschrieben, wobei in der schematischen Zeichnung

Fig. 1    den Wandquerschnitt mit dem entsprechenden Schichtenaufbau eines Druckrohres,

Fig. 2    den entsprechenden Querschnitt eines drucklosen Rohres,

Fig. 3    den entsprechenden Querschnitt einer Kupplung,

Fig. 4    einen Schnitt durch eine Rohrkupplung und einen Teil des dazugehörigen Rohres,

Fig. 5    einen Schnitt durch eine Rohrwandung gemäss dem Beispiel 6 und

Fig. 6    einen Schnitt durch eine Rohrwandung gemäss dem Beispiel 7

zeigt.

Mit dem hier verwendeten Ausdruck "Entmischung" wird folgendes verstanden:

Eine zur Bildung einer Matrix dienende Mischung von Harz und Füllstoffen mit einem Gehalt an Füllstoffen von x Gew% wird in eine rotierende Matrize eingeführt. Nach einer gewissen Zeit wird in jeder Hälfte der aufgebrachten Schicht der Mittelwert des Füllstoffes festgelegt. Beträgt er im Innenteil y Gew%, dann ist die Entmischung EM in Prozenten

$$EM = (1 - y/x) \cdot 100$$

Wenn die Messungen nicht die Hälfte an Füllstoffen betragen, so wird dies separat angegeben.

Beispiel 1 zur Herstellung eines Druckrohrs:

In eine rotierende Matrize mit einem Innendurchmesser von 225 mm wurde eine Mischung aus zwei Gewichtsteilen Füllstoff und einem Gewichtsteil Polyesterharz eingeführt. Die Drehzahl beträgt 543 Umdrehungen pro Minute, was einem G-Wert von 33 entspricht. Nach zwei Minuten hat man eine Entmischung von 7.05 % erreicht, wobei der Harzgehalt in der äusseren Schicht 20 Gew% und in der inneren Schicht 38 Gew% beträgt. In die innere Schicht werden geschnittene Glasfasern (Rovings) mit einer Drehzahl von 380 Umdrehungen pro Minute eingeschleudert.

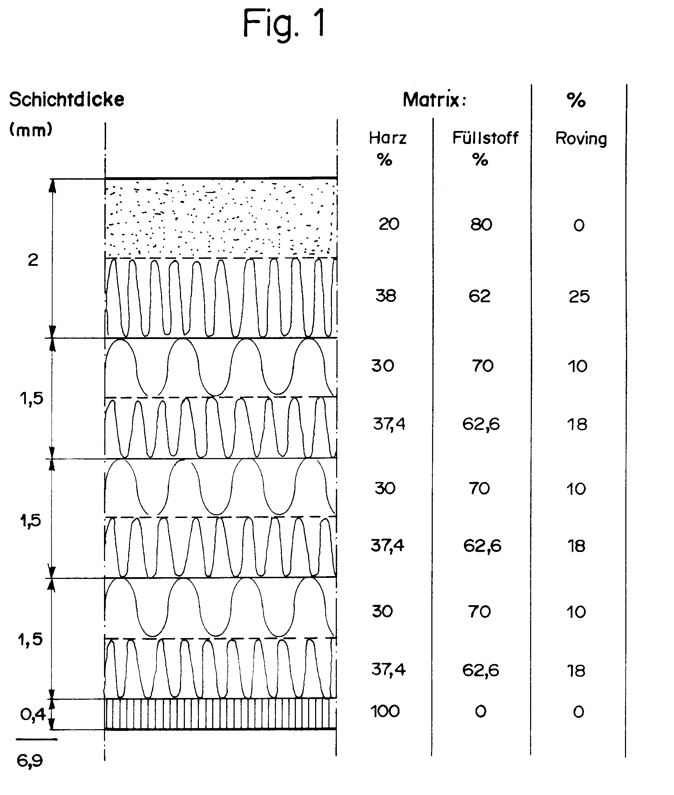

Nachher wird dieselbe Füllstoff/Harz-Mischung mit einer Drehzahl von 380 Umdrehungen pro Minute beigefügt, was einem G-Wert von 16,1 entspricht. Nach einer Minute ist in dieser zweiten Schicht eine Entmischung von 6,1 % eingetreten. Geschnittene Rovings dringen in beide Schichten ein, wie das in der Fig. 1 durch Wellenlinien und Prozentangaben dargestellt ist, in welcher der untere Wand-Rand die Rohr-Innenfläche darstellt. Dieses Verfahren wird zweimal wiederholt und anschliessend wird eine 0,4 mm dünne Deckschicht mit einem flexiblen Harz zugeführt. Nach dem Aushärten erhält man ein Rohr mit einem Wandungsaufbau, wie er in der Fig. 1 dargestellt ist. In der Aussenschicht befinden sich fast keine Glasfasern, weil der Gehalt an Füllstoff dort so hoch ist, dass die Fasern nicht eindringen konnten wie in den anderen Schichten. Die aus flexiblen Harz bestehende Innenschicht zeichnet sich dadurch aus, dass im ausgehärteten Zustand ihre Bruchdehnung grösser ist als 10 %.

Beispiel 2 zur Herstellung eines Rohres für Freispiegelleitungen, also für drucklose Verwendung:

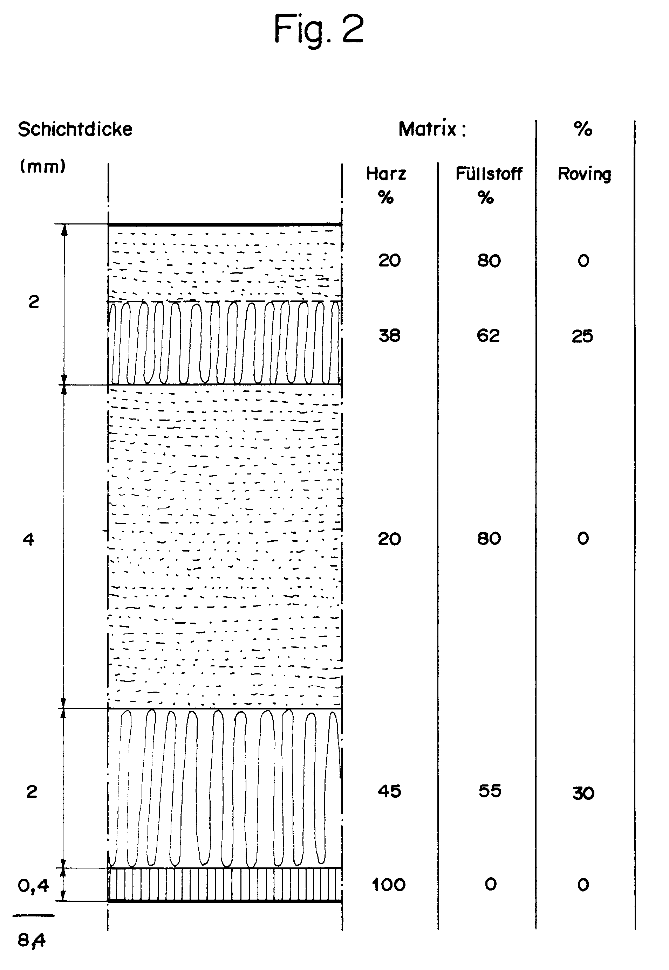

In eine rotierende Matrize mit einem Innendurchmesser von 315 mm wird eine Mischung aus zwei Gewichtsteilen Füllstoff und einem Gewichtsteil Harz mit einer Drehzahl von 438 Umdrehungen pro Minute (G = 34) zugeführt. Nach zwei Minuten beträgt die Entmischung 7,0 %. In die innere harzreichere Schicht wird geschnittener Roving hinzugefügt mit einer Drehzahl von 254 Umdrehungen pro Minute. Danach wird bei wieder auf 438 erhöhter Drehzahl eine Füllstoff/Harz-Mischung mit einem Füllstoffgehalt von 71 Gew% zugeführt. Nach drei Minuten hat sich folgende Entmischung eingestellt: In Zweidritteln der Schichtdicke beträgt der Gehalt an Füllstoff 80 % und im andern Drittel 55 %. In diese harzreichere Schicht wird geschnittener Roving eingeschleudert und nachträglich noch eine dünne Schicht eines flexiblen Harzes. Nach dem Aushärten erhält man ein Rohr mit einem Wandaufbau, wie er in der Fig. 2 dargestellt ist.

Beispiel 3 zur Herstellung einer Rohrkupplung:

In eine rotierende Matrize mit einem Innendurchmesser von 347 mm wird eine Mischung von 60 Gewichtsteilen Füllstoff und 100 Gewichtsteilen Polyesterharz eingeführt, bis eine Schichtdicke von 4 mm erreicht ist. Die Drehzahl beträgt 203 Umdrehungen pro Minute und G ist 8. Nach 3 Minuten hat man eine Entmischung von 67 % erhalten und der Gehalt des Füllstoffs beträgt im äusseren Teil 50 Gew% und im inneren Teil 16,7 Gew%. In beide Schichten werden 50 mm lange Rovings eingeschleudert. Das Verfahren wird dann einmal wiederholt.

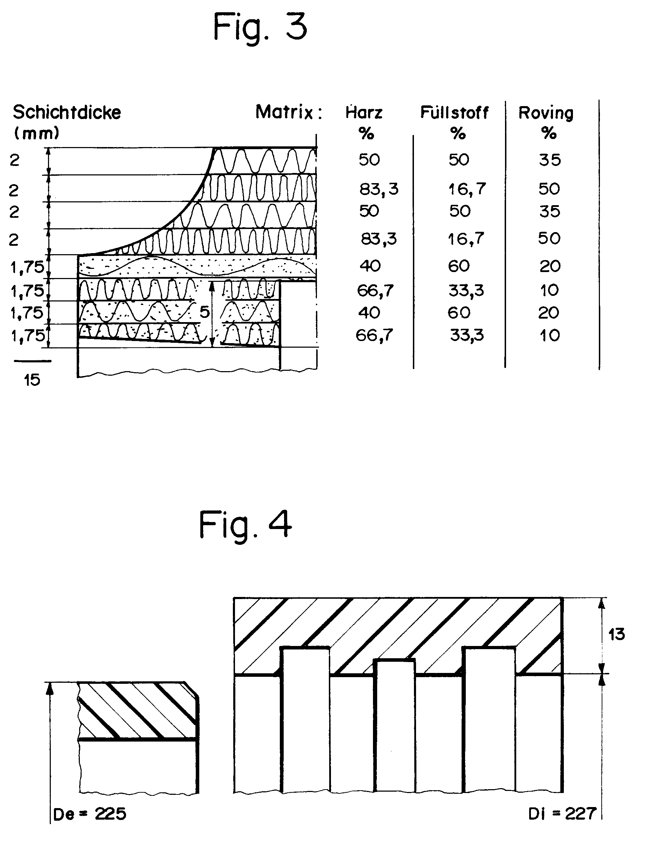

Nachher wird mit derselben Drehzahl eine Mischung von 100 Gewichtsteilen Füllstoff und 100 Gewichtsteilen Polyesterharz zugeführt. Nach 30 Sekunden hat man eine Entmischung von 50 % erhalten und der Gehalt an Füllstoff beträgt im inneren Teil 33,3 % und im äussern Teil dieser dritten Schicht 60 %. In beide Schichten werden kurze Glasfasern mit einer Länge von 20 mm eingeschleudert. Das Verfahren wird einmal wiederholt. Nach dem Aushärten lassen sich die benötigten Nuten einschleifen. So erhält man einen Kupplungsring mit einer Wand, wie sie in der Fig. 3 dargestellt ist. Dieser Ring lässt sich mit Rohren von einem Aussendurchmesser von 340 mm verwenden.

Wie aus den vorangehenden Beispielen ersichtlich, ist das Gewichtsverhältnis der Bestandteile Füllstoff/Harz der jeweils einzubringenden Mischung stets grösser als 1:2, wobei das im fertigen Rohrleitungsteil in den einzelnen Schichten tatsächlich vorhandene Gewichtsverhältnis durch den jeweiligen Entmischungsvorgang erzeugt wird.

Bei sehr feinen Füllstoffen kann bei einem Gewichtsverhältnis Füllstoff/Harz von 2:1 und darüber die Viscosität 5000 cps und mehr betragen. Bei solchen Viscositäten ist die Entmischung sehr gering und liegt in der Grössenordnung 2 - 5 % bei normalen Drehzahlen und Behandlungszeiten. Dabei erhält man in beiden Schichtpartien einen hohen Gehalt an Füllstoff sowie hohe Viscositäten. Um trotzdem eine gute Festigkeit im herzustellenden Rohrleitungsteil, bei dem es sich um ein Rohr oder eine Kupplung handeln kann, zu erhalten, muss man sehr viele dünne Schichten erzeugen. Es hat sich gezeigt, dass bei Rohren mit einem Durchmesser von 200 - 400 mm mit einer Wandstärke von 10 mm eine optimale Wirtschaftlichkeit bei einer Schichtdicke von 0,1 - 0,7 mm erhalten wird. Dieses wird in folgenden Beispielen erörtert:

Beispiel 4:

In eine rotierende Matrize mit einem Innendurchmesser von 225 mm wird eine Mischung von 200 Gewichtsteilen Füllstoffe und 100 Gewichtsteilen Polyesterharz eingeführt. Diese Mischung hat eine Viscosität von 6000 cps. Die Drehzahl beträgt 350 Umdrehungen pro Minute. Nach 30 Sekunden erhält man eine Entmischung von 2 %; dann werden geschnittene Rovings eingeführt. Die Dicke der einzelnen Schicht beträgt insgesamt 0,65 mm. Nachdem das Verfahren 9 Mal wiederholt wird, erhält man ein Rohr mit einer Wandddicke von 6,5 mm. Der Gehalt an Glasfasern beträgt 15 Gew%, der Berstdruck 50 bar.

Beispiel 5:

Mit einer rotierenden Matrize mit einem Innendurchmesser von 253 mm wird der im vorstehenden Beispiel 4 beschriebene Einzelschritt zur Erzeugung einer 0,65 mm-Schicht 20 Mal wiederholt, so dass ein Ring entsteht, aus welchem sich durch Herausschleifen von ringförmigen Nuten eine Rohrkupplung mit einem Innendurchmesser Di = 227 mm herstellen lässt, von der die Fig. 4 einen Wandquerschnitt darstellt. Diese Kupplung lässt sich für einen Arbeitsdruck von 10 bar für Rohre mit einem Aussendurchmesser De von 225 mm verwenden.

Beispiel 6:

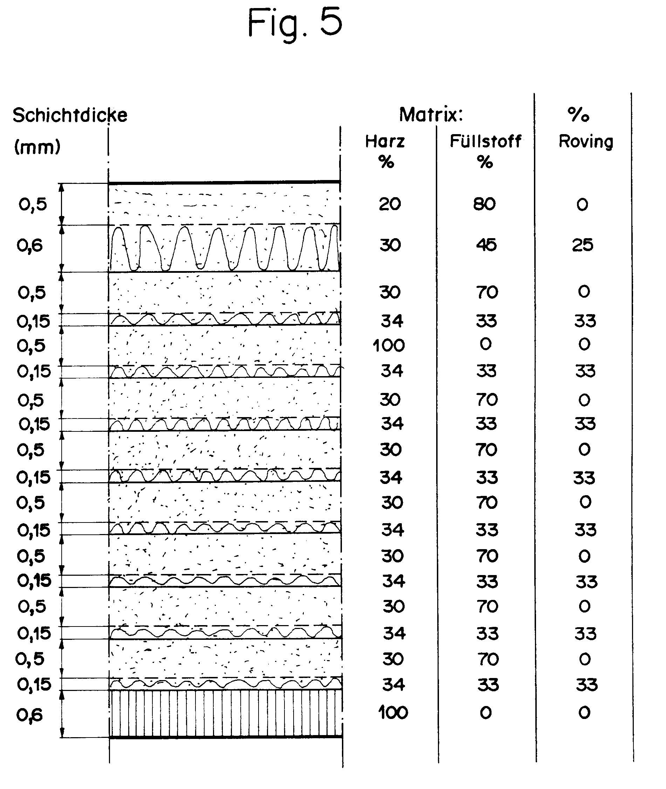

In eine rotierende Matrize mit einem Innendurchmesser von 225 mm wird bei einer Tourenzahl von 350/Min. eine Mischung von 200 Gewichtsteilen Füllstoff und 100 Gewichtsteilen Polyesterharz eingebracht, die eine Viscosität von 6000 cps hat. Sofort anschliessend werden alsdann Glasfasern in Form von geschnittenen Rovings eingebracht, wobei nur so wenig Material verwendet wird, dass die Dicke der Einzelschicht höchstens 0,65 mm beträgt. Dieses Verfahren wird noch 8 Mal wiederholt. Wenn man am Ende nach einer Wartezeit von 1 Min. noch reines Harz einbringt, erhält man eine Rohrwand, wie sie in der Fig. 5 dargestellt ist, wobei allerdings die reinen Füllstoffschichten auch etwas Glasfasern enthalten.

Beispiel 7:

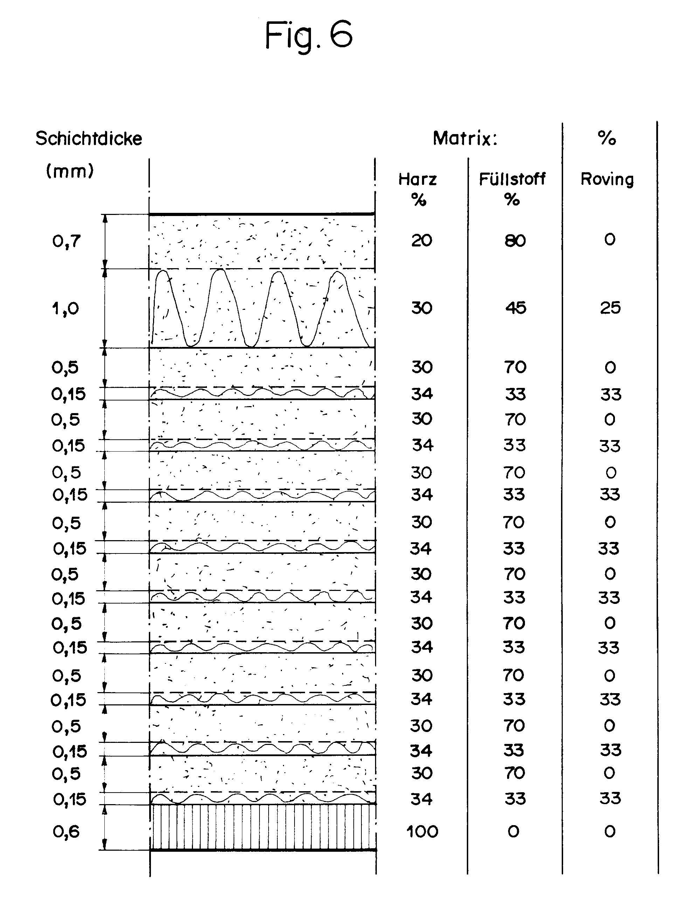

Das Verfahren gemäss Beispiel 4 wird 8 Mal wiederholt, wobei, wie in Beispiel 6, die Glasfasern sofort nach dem Eintragen der Füllstoff-Harz-Mischung zugeführt werden. Es bilden sich neunmal zwei Teil-Schichten oder Partien, von denen die eine hauptsächlich aus der Füllstoff/Harz-Mischung mit wenigen Glasfasern, die andere aber aus einer Glasfasernschicht, die mit der Füllstoff/Harz-Mischung imprägniert ist, besteht, wie das vorstehend beschrieben und in der Fig. 6 dargestellt ist.

Nachher wird eine Mischung von Füllstoff/Harz zugeführt und nach einer Wartezeit von ca. 1 Minute werden Glasfasern zugeführt und am Schluss reines Harz.

Geeignete Füllstoffe sind Aluminiumhydroxid, sehr feine Quarzpulver, Pulver aus unterschiedlichem Ton, Dolomitpulver und Kreide (Calziumkarbonat). Diese pulverförmigen anorganischen Füllstoffe, die eine Korngrösse von weniger als 0,1 mm haben, können rein oder in Mischungen verwendet werden.

Auch Zuschlagstoffe wie Quarzsand, Feldspat etc., mit einer Korngrösse von 0,1 bis 1 mm können in üblicher Weise bei dem Verfahren zugesetzt werden. Normalerweise geschieht dies in den mittleren Schichten, insbesonders bei dickwandigen Rohren wie z.B. Vorpressrohren.

Beispiel 8:

In eine rotierende Matrize mit einem Innendurchmesser von 1228 mm und einer Länge von sechs Metern wird mittels einer Lanze eine Füllstoff/Harz-Mischung mit 150 Gewichtsteilen Füllstoff und 100 Teilen Harz zugeführt. Die Lanze hat eine Vorschub-Geschwindigkeit von 6 m/Min. und wird nach dem Einbringen der Mischung wieder mit derselben Geschwindigkeit zurückgezogen. Dann werden der Matrize mittels der Lanze Glasfasern in der Form von 50 mm lang geschnittenen Rovings mit derselben konstanten Horizontalgeschwindigkeit zugeführt. Es bilden sich zwei Schichten: Eine Aussenschicht mit etwa 75 % Füllstoff und 25 % Harz sowie eine Armierungsschicht mit etwa 35 % Glasfasern und einer Matrix aus Füllstoff/Harz.

Das Rohr wird dann weiter aufgebaut durch Anbringen von mehreren Lagen Sand, Glasfasern und der 150/100 Füllstoff/Harz-Mischung. Es entstehen Schichten, welche etwa 3 % Glasfasern, 18 % Harz, 27 % Füllstoff und 52 % Sand enthalten.

Nachher wird noch eine Lage der Füllstoff/Harz-Mischung eingebracht und die Lanze zurückgezogen. Dann werden nur Glasfasern zugeführt und schliesslich nur Harz.

Man erhält so ein Rohr mit einer Wanddicke von 25 mm. Das Rohr hat eine Steifheit von 11'200 N/m$^2$ und eine Bruchdeformation von 19 %.

Es hat sich gezeigt, dass Karbonatpulver als Füllstoff oder Füllstoffbestandteil besonders geeignet ist; trotzdem Karbonate nicht säurebeständig sind, hat es sich gezeigt, dass sehr gute Ergebnisse mit solchen Füllstoffen erhalten werden. Damit kann z.B. die Korrosionsbeständigkeit von glasfaserverstärkten Produkten erhöht werden, besonders von solchen, die einer hohen Biegebeanspruchung unterliegen, wie z.B. erdverlegte Rohre.

Wenn ein glasfaserverstärktes Rohr in Umfangrichtung beansprucht und für Schwefelsäure benützt wird, kann es dazu kommen, dass innen Risse entstehen. Die Schwefelsäure dringt durch diese Risse in die Rohrwand ein und erreicht die Glasfasern. Diese werden von der Schwefelsäure angegriffen und CaO-Gruppen werden aus der Glasoberfläche entfernt. Dadurch entsteht eine sehr grosse Reduktion der Biegefestigkeit der Rohre und ein Versagen tritt ein. Dieser Mechanismus wird von den Fachleuten "Strain corrosion" genannt. Um die Beständigkeit gegen "Strain corrosion" zu erhöhen, wird das übliche E-Glas durch das sogenannte ECR-Glas ersetzt. Glasfasern aus ECR-Glas sind teurer als Glasfasern aus E-Glas und sind schwierig zu erhalten. Durch die Verwendung von karbonathaltigen Füllstoffen tritt keine "Strain corrosion" auf.

Um eine erhöhte Festigkeit zu erhalten, ist es zweckmässig, mit unterschiedlichen Faserlängen zu arbeiten. Zweckmässig ist eine Mischung von kurzen, mittleren und langen Fasern, z.B. 10-16 mm, 20-30 mm und 35-60 mm.

Die Erfindung ist nicht auf die Herstellung von Rohrleitungsteilen mit kleinem Durchmesser begrenzt. Auch bei grossen Durchmessern kann die Erfindung verwendet werden. Bei Rohren von einem Durchmesser von 600 mm und mehr kann die Erfindung insbesondere zur Herstellung des inneren Rohrteils, d.h. der Sperrschicht angewendet werden.

Um eine genügende Berstfestigkeit zu erhalten, werden bekannte Rohrteile dieser Art mit Hilfe von teuren Polyesterharzen, z.B. Vinylestern hergestellt. Dies hängt damit zusammen, dass durch die hohe Exothermtemperatur, welche in dickwandigen Rohrteilen, z.B. Kupplungen entsteht, sich hohe Eigenspannungen bilden. Diese Eigenspannungen führen zu Delaminierungen und zur Undichtigkeit, wenn nicht Harze mit grosser Festigkeit und Haftung an Glasfasern verwendet werden. Durch die vorliegende Erfindung ist es möglich, Kupplungen herzustellen, welche ca. 60 % weniger teuer sind und höhere Innendruckfestigkeit als bekannte Kupplungen haben.

In den Beispielen sind mit dem Ausdruck "normales Polyesterharz" Harze auf der Basis von Orthophtalsäure oder Isophtalsäure zu verstehen. Die Erfindung ist aber nicht nur auf diese zwei Typen von Polyesterharzen begrenzt. Abhängig vom Verwendungszweck können auch Harze wie Terephtalsäureharze, Bisphenolharze und Vinylharze verwendet werden. Zweckmässig ist die Verwendung von Harzen mit hoher Bruchdehnung, besonders bei Druckrohren ist dies wichtig. Die Bruchdehnung soll dann in der Höhe von 3 - 4 % liegen, durch Zusatz von flexiblen Harzen kann sie noch höher gebracht werden.

Die karbonathaltigen Füllstoffe eignen sich besonders zur Herstellung von Rohren und Kupplungen für erdverlegte Rohrleitungen.

**Patentansprüche**

1. Verfahren zur Herstellung von mehrschichtigen Rohrleitungsteilen aus Kunststoff, anorganischem Füllstoff und Glasfasern im Schleuderguss-Verfahren, dadurch gekennzeichnet, dass zur Bildung der einzelnen miteinander unlösbar verbundenen Schichten eine fliessfähige Mischung aus feinkörnigem, pulverförmigen Füllstoff und Harz in einem Gewichtsverhältnis grösser als 1:2 einer rotierenden Matrize zugeführt und durch Steuerung der Matrizendrehzahl während einer vorbestimmten Zeit in der sich bildenden Schicht eine vorbestimme Entmischung von Harz und Füllstoff erzeugt wird, wonach der mit vorbestimmter Drehzahl rotierenden Matrize Glasfasern so zugeführt werden, dass diese wenigstens in die innere, durch die Entmischung harzreicher gewordene Schichtpartie eindringen, worauf dieser gesamte Vorgang mindestens einmal wiederholt wird.

2. Verfahren nach Anspruch 1, dadurch gekennzeichnet, dass die fliessfähige Mischung aus feinkörnigem, pulverförmigem Füllstoff und einem Polyesterharz im Gewichtsverhältnis grösser als 1:2 besteht.

3. Verfahren nach Anspruch 2 zur Herstellung eines Rohrteils für Leitungen mit hoher Innendruckbelastung, dadurch gekennzeichnet, dass zur Bildung der von aussen nach innen aufeinanderfolgenden Schichten jeweils eine Füllstoff/Harz-Mischung im Gewichtsverhältnis 1:1 oder grösser bei einer zu einem G-Wert grösser als 15 führenden Drehzahl der Matrize zugeführt wird.

4. Verfahren nach Anspruch 3, dadurch gekennzeichnet, dass zur Bildung jeder Schicht eine Füllstoff/Harz-Mischung im Gewichtsverhältnis von 2:1 verwendet wird, wobei in der radial äusseren Schicht eine grössere Entmischung erzeugt wird als in den übrigen Schichten, und wobei nach der Zufuhr der Füllstoff/Harz-Mischung jeder Schicht Glasfasern so zugeführt werden, dass diese in der radial äusseren Schicht nur in die harzreicher gewordene Innenpartie dieser Schicht, in den übrigen Schichten jedoch auch in die harzärmer gewordene Schichtpartie eindringen.

5. Verfahren nach Anspruch 2 zur Herstellung eines Rohrteils für Freispiegel-Leitungen, dadurch gekennzeichnet, dass zur Bildung der von aussen nach innen aufeinanderfolgenden Schichten eine Füllstoff/Harz-Mischung im Gewichtsverhältnis grösser als 1:1 verwendet wird, und dass die Füllstoff/Harz-Mischung für die radial äussere Schicht ein grösseres Gewichtsverhältnis aufweist als jene für die radial innere Schicht, wobei die Entmischung in den beiden Schichten so gesteuert wird, dass eine grössere Partie der radial äusseren Schicht harzärmer und füllstoffreicher wird, als in der radial inneren Schicht, und wobei die Glasfaserzufuhr zu den beiden Schichten so erfolgt, dass die Glasfasern jeweils nur in die harzreicher gewordenen Schichtpartien eindringen.

6. Verfahren nach Anspruch 2 zur Herstellung einer Kupplung, dadurch gekennzeichnet, dass zur Bildung der von aussen nach innen aufeinanderfolgender Schichten Füllstoff/Harz-Mischungen im Gewichtsverhältnis von mindestens 1:1 verwendet werden, und dass die Entmischung in den einzelnen Schichten so gesteuert wird, dass die radial äusseren Schichten harzreichere innere Schichtpartien erhalten als die radial inneren Schichten, wobei die Glasfaserzufuhr so erfolgt, dass die radial inneren Schichten weniger als die radial äusseren, alle Schichten aber durchgehend Glasfasern erhalten, und wobei nach dem Aushärten aller Schichten die zur Aufnahme von Dichtungsringen bestimmten Nuten in die radial inneren Schichten geschliffen werden.

7. Verfahren nach Anspruch 2, dadurch gekennzeichnet, dass eine Mischung aus feinkörnigem Füllstoff und Polyesterharz verwendet wird, deren Viscosität so hoch ist, dass die Entmischung kleiner ist als 5 %, und dass die einzelnen Schichten so dünn sind, dass die Imprägnierung der Glasfaserschicht im wesentlichen dadurch entsteht, dass aus der Füllstoff/Harz-Mischung ein mit Harz angereicherter Teil in die Glasfaserschicht eindringt.

8. Verfahren nach Anspruch 7, dadurch gekennzeichnet, dass die einzelnen Schichten in einer Dicke von weniger als 0,7 mm erzeugt werden.

9. Verfahren nach Anspruch 8, dadurch gekennzeichnet, dass in der äussersten Schicht eine grössere Entmischung erzeugt wird als in den folgenden Schichten.

10. Verfahren nach Anspruch 8, dadurch gekennzeichnet, dass in der innersten Füllstoff/Harz-Schicht eine grössere Entmischung erzeugt wird als in den vorangehenden Schichten.

11. Verfahren nach Anspruch 9 oder 10, dadurch gekennzeichnet, dass die Dicke der innersten Glasfaserschicht mindestens 30 % grösser ist als die Dicke der anderen Glasfaserschichten.

12. Verfahren nach einem der Ansprüche 1 bis 11, dadurch gekennzeichnet, dass als feinkörniger, pulverförmiger Füllstoff ein Pulver aus der Gruppe Aluminiumhydroxid, Quarzpulver, Gips, Pulver aus unterschiedlichem Ton, Dolomitpulver und Kreide (Calziumkarbonat) oder eine Mischung aus mindestens zwei dieser Pulver verwendet wird, wobei der Durchmesser der Pulverteilchen kleiner ist als 0,1 mm.

13. Verfahren nach einem der Ansprüche 1 bis 12, dadurch gekennzeichnet, dass als Harz ein Polyesterharz auf der Basis von Orthophtalsäure oder Isophtalsäure oder ein Terephtalsäureharz, ein Bisphenolharz oder ein Vinylharz mit oder ohne Zusatz eines flexiblen Harzes verwendet wird.

14. Verfahren nach einem der Ansprüche 1 bis 13, dadurch gekennzeichnet, dass geschnittene Glasfasern gleicher oder unterschiedlicher Länge verwendet werden, z.B, von 10-16 mm, von 20-30 mm und von 30-60 mm.

15. Verfahren nach einem der Ansprüche 1 bis 14, dadurch gekennzeichnet, dass anschliessend an mindestens eine Glasfaserschicht eine Schicht aus einem Zuschlagstoff mit einem Korndurchmesser von 0,1 bis 1 mm aufgebracht wird.

16. Verfahren nach Anspruch 15, dadurch gekennzeichnet, dass als Zuschlagstoff Sand, Quarzsand oder Feldspat verwendet wird.

17. Rohrleitungsteil, also Rohr oder Rohrkupplung, aus Polyesterharz, Füllstoff und Glasfasern, dadurch gekennzeichnet, dass es derart aus ineinander übergehenden dünnwandigen Schichten aufgebaut ist, dass sich abwechslungsweise Schichten mit und Schichten ohne Glasfasern folgen, wobei die glasfaserfreien Schichten mindestens 50 Gew% und die glasfaserhaltigen Schichten mindestens 30 Gew% Füllstoff enthalten.

## Claims

1. Method for producing multi-layer pipe conduit components of plastics material, inorganic filler material and glass fibres in the centrifugal casting process, characterised thereby that for the formation of individual non-detachably interconnected layers a flowable mixture of finegrained pulverulent filler material and resin in a weight ratio greater than 1:2 is fed to a rotating mould and a predetermined separation of resin and filler material is produced in the forming layer by control of the mould rotational speed during a predetermined time, after which glass fibres are so fed to the mould rotating at predetermined rotational speed that these penetrate at least into the inner layer region which has become resin-enriched by the separation, whereupon this entire procedure is repeated at least once.

2. Method according to claim 1, characterised thereby that flowable mixture consists of fine-grained pulverulent filler matrial and a polyester resin in the weight ratio greater than 1:2.

3. Method according to claim 2 for producing a pipe component for conduits with high internal pressure loading, characterised thereby that formation of the layers succeeding one another from outside to inside a filler material and resin mixture in the weight ratio 1:1 or greater is fed each time to the mould at a rotational speed leading to a G value greater than 15.

4. Method according to claim 3, characterised thereby that a filler material and resin mixture in the weight ratio of 2:1 is used for the formation of each layer, wherein a greater separation is produced in the radially outer layer than in the remaining layers and wherein after the feed of the filler material and resin mixture glass fibres are so fed to each layer that in the radially outer layer these penerate only into the inner region of this layer that has become resin-enriched, but in the remaining layers also penetrate into the layer region that has become weak-in resin.

5. Method according to claim 2 for producing a pipe component for open-air conduits, characterised thereby that a filler material and resin mixture in the weight ratio greater than 1:1 is used for the formation of the layers succeeding one another from outside to inside and that the filler material and resin mixture for the radially outer layer has a greater weight ratio than that for the radially inner layer, wherein the separation in the two layers is so controlled that a greater region of the radially outer layer is weak in resin and rich in filler material than in the radially inner layer and wherein the feed of glass fibres to the two layers is so effected that the glass fibres penetrate each time only into the layer regions that have become resin-enriched.

6. Method according to claim 2 for producing a coupling, characterised thereby that filler material and resin mixtures in the weight ratio of at least 1:1 are used for the formation of the layers succeeding one another from outside to inside and that the separation in the individual layers is so controlled that the radially outer layers contain inner layer regions richer in resin than the radially inner layers, wherein the feed of glass fibres is so effected that the radially inner layers contain fewer glass fibres, which however pass through all layers, than the radially outer layers, and wherein after curing of all layers the grooves intended for the reception of sealing rings are ground into the radially inner layers.

7. Method according to claim 2, characterised thereby that a mixture of fine-grained filler material and polyester resin is used, the viscosity of which is so high that the separation is smaller than 5%, and that the individual layers are so thin that the impregnation of the glass fibre layer substantially arises thereby that a part enriched with resin penetrates into the glass fibre layer from the filler material and resin mixture.

8. Method according to claim 7, characterised thereby that the individual layers are produced in a thickness of less than 0.7 millimetres.

9. Method according to claim 8, characterised thereby that a greater separation is produced in the outermost layer than in the succeeding layers.

10. Method according to claim 8, characterised thereby that a greater separation is produced in the innermost filler material and resin layer than in the preceding layers.

11. Method according to claim 9 or 10, characterised thereby that the thickness of the innermost glass fibre layer is at least 30% greater than the thickness of the other glass fibre layers.

12. Method according to one of claims 1 to 11, characterised thereby that a powder from the group aluminium hydroxide, quartz powder, gypsum, powder of different types of clay, dolomite powder and chalk (calcium carbonate) or a mixture of at least two of these powders is used as fine-grained pulverulent filler material, wherein the diameter of the powder particles is smaller than 0.1 millimetres.

13. Method according to one of claims 1 to 12, characterised thereby that a polyester resin on the basis of orthophtalic acids or isophtalic acids or a terephtalic acid resin, a bisphenol resin or a vinyl resin with or without addition of a flexible resin is used as resin.

14. Method according to one of claims 1 to 13, characterised thereby that cut glass fibres of the same or different lengths are used, for example of 10 to 16 millimetres, of 20 to 30 millimetres and of 30 to 60 millimetres.

15. Method according to one of claims 1 to 14, characterised thereby that a layer of a supplementary material with a grain diameter of 0.1 to 1 millimetre is subsequently applied to at least one glass fibre layer.

16. Method according to claim 15, characterised thereby that sand, quartz sand or feldspar is used as supplementary material.

17. Pipe conduit component, thus pipe or pipe coupling, of polyester resin, filler material and glass fibres, characterised thereby that it is so built up from thin-walled layers merging into one another that layers with and layers without glass fibres succeed in alternation, wherein the layers free of glass fibres contain at least 50% by weight of filler material and the layers containing glass fibres contain at least 30% by weight of filler material.

**Revendications**

1. Procédé de fabrication d'éléments de tuyauterie comprenant plusieurs couches et formés d'une matière plastique, d'une charge non organique et de fibres de verre, par le procédé de coulée centrifuge, caractérisé en ce que, pour former les différentes couches reliées entre elles d'une manière inséparable, on envoie dans une matrice rotative un mélange fluide formé d'une charge pulvérulente à grain fin et d'une résine, dans un rapport en poids supérieur à 1:2, et en ce qu'en comman dant la vitesse de rotation de la matrice pendant une durée prédéterminée, on produit une ségrégation déterminée de la résine et de la charge dans la couche qui se forme, à la suite de quoi on envoie des fibres de verre dans la matrice tournant à une vitesse de rotation prédéterminée, d'une façon telle que ces fibres de verre pénètrent au moins dans la partie de couche située à l'intérieur qui est devenue plus riche en résine du fait de la ségrégation, puis on répète au moins une fois l'ensemble de ces opérations.

2. Procédé selon la revendication 1, caractérisé en ce que le mélange fluide est constitué d'une charge pulvérulente à grain fin et d'une résine de polyester dans un rapport en poids supérieur à 1:2.

3. Procédé selon la revendication 2 pour la fabrication d'un élément de tuyauterie pour une tuyauterie soumise à une sollicitation de pression intérieure assez élevée, caractérisé en ce que, pour former chacune des couches qui se succèdent de l'extérieur vers l'intérieur, on introduit chaque fois dans la matrice un mélange charge/résine ayant un rapport en poids égal ou supérieur à 1:1 pour une vitesse de rotation entraînant une valeur G supérieure à 15.

4. Procédé selon la revendication 3, caractérisé en ce que, pour former chaque couche, on utilise un mélange charge/résine ayant un rapport en poids égal à 2:1, en produisant une ségrégation plus importante dans la couche radialement extérieure que dans les autres couches, tandis qu'après l'introduction du mélange charge/résine de chaque couche, on introduit des fibres de verre d'une façon telle que ces dernières, pour ce qui est de la couche radialement extérieure, ne pénètrent que dans la partie intérieure, de celle-ci, devenue plus riche en résine, mais, pour ce qui est des autres couches, pénètrent aussi dans la partie de couche devenue plus pauvre en résine.

5. Procédé selon la revendication 2 pour la fabrication d'un élément de tuyauterie pour une tuyauterie à écoulement libre, caractérisé en ce que, pour former les couches qui se succèdent de l'extérieur vers l'intérieur, on utilise un mélange charge/résine ayant un rapport en poids supérieur à 1:1 et en ce que le mélange charge/résine correspondant à la couche radialement extérieure présente un rapport en poids supérieur à celui correspondant à la couche radialement intérieure, la ségrégation étant commandée dans les deux couches d'une façon telle qu'une plus grande partie de la couche radialement extérieure devient plus pauvre en résine et plus riche en charge que dans la couche radialement intérieure, l'introduction des fibres de verre pour les deux couches ayant lieu d'une façon telle que, dans chaque cas, les fibres de verre ne pénètrent que dans les parties de couche devenues plus riches en résine.

6. Procédé selon la revendication 2 pour la fabrication d'un raccord, caractérisé en ce que, pour former les couches qui se succèdent de l'extérieur vers l'intérieur, on utilise des mélanges charge/résine ayant un rapport en poids au moins égal à 1:1 et en ce que la ségrégation dans les différentes couches est commandée d'une façon telle que les couches radialement extérieures contiennent des parties intérieures de couche plus riches en résine que les couches radialement intérieures, l'introduction des fibres de verre ayant lieu d'une façon telle que les couches radialement intérieures en reçoivent moins que les couches radialement extérieures, mais toutes les couches en recevant, tandis qu'après le durcissement de toutes les couches, on réalise par meulage, dans les couches radialement intérieures, des gorges destinées à recevoir des bagues d'étanchéité.

7. Procédé selon la revendication 2, caractérisé en ce qu'on utilise un mélange d'une charge à grain fin et d'une résine de polyester, mélange dont la viscosité est si élevée que la ségrégation est inférieure à 5 %, et en ce que les différentes couches sont si minces que l'imprégnation de la couche de fibres de verre résulte essentiellement du fait qu'à partir du mélange charge/résine c'est une partie enrichie en résine qui pénètre dans la couche de fibres de verre.

8. Procédé selon la revendication 7, caractérisé en ce que les différentes couches sont produites avec une épaisseur au moins égale à 0,7 mm.

9. Procédé selon la revendication 8, caractérisé en ce que, dans la couche la plus extérieure, il est produit une ségrégation plus importante que dans les couches qui suivent.

10. Procédé selon la revendication 8, caractérisé en ce que, dans la couche de charge/résine la plus intérieure, la ségrégation produite est plus importante que dans les couches qui précèdent.

11. Procédé selon l'une des revendications 9 et 10, caractérisé en ce que l'épaisseur de la couche de fibres de verre la plus intérieure est au moins supérieure de 30 % à l'épaisseur des autres couches de fibres de verre.

12. Procédé selon l'une des revendications 1 à 11, caractérisé en ce que, comme charge pulvérulente à grain fin, on utilise une poudre appartenant au groupe constitué par les hydroxyde d'aluminium, poudre de quartz, gypse, poudre d'argiles de différents types, poudre de dolomite et craie (carbonate de calcium) ou un mélange d'au moins deux de ces poudres, le diamètre des particules de poudre étant inférieur à 0,1 mm.

13. Procédé selon l'une des revendications 1 à 12, caractérisé en ce que, comme résine, on utilise une résine de polyester à base d'acide orthophtalique ou d'acide isophtalique ou une résine d'acide téréphtalique, une résine de bisphénol ou une résine vinylique, avec ou sans addition d'une résine souple.

14. Procédé selon l'une des revendications 1 à 13, caractérisé en ce qu'on utilise des fibres de verre coupées ayant des longueurs identiques ou différentes, par exemple de 10-16 mm, de 20-30 mm et de 30-60 mm.

15. Procédé selon l'une des revendications 1 à 14, caractérisé en ce qu'à la suite d'au moins une couche de fibres de verre, on applique une couche formée d'un agrégat ayant un diamètre de grain compris entre 0,1 et 1 mm.

16. Procédé selon la revendication 15, caractérisé en ce que, comme agrégat, on utilise du sable, du sable siliceux ou du feldspath.

17. Elément de tuyauterie, à savoir tuyau ou raccord de tuyaux, formé d'une résine de polyester, d'une charge et de fibres de verre, caractérisé en ce qu'il est constitué de couches à paroi mince qui s'interpénètrent mutuellement, d'une façon telle que des couches contenant des fibres de verre et des couches sans fibres de verre se succèdent d'une manière alternée, les couches sans fibres de verre contenant au moins 50 % en poids de charge et les couches contenant des fibres de verre contenant au moins 30 % en poids de charge.

# Fig. 1

| Schichtdicke (mm) | | Matrix: | | % |
| --- | --- | --- | --- | --- |
| | | Harz % | Füllstoff % | Roving |
| | | 20 | 80 | 0 |
| 2 | | 38 | 62 | 25 |
| | | 30 | 70 | 10 |
| 1,5 | | 37,4 | 62,6 | 18 |
| | | 30 | 70 | 10 |
| 1,5 | | 37,4 | 62,6 | 18 |
| | | 30 | 70 | 10 |
| 1,5 | | 37,4 | 62,6 | 18 |
| 0,4 | | 100 | 0 | 0 |

6,9

# Fig. 2

| Schichtdicke (mm) | Matrix: Harz % | Füllstoff % | % Roving |
|---|---|---|---|
| 2 | 20 | 80 | 0 |
|   | 38 | 62 | 25 |
| 4 | 20 | 80 | 0 |
| 2 | 45 | 55 | 30 |
| 0,4 | 100 | 0 | 0 |
| 8,4 |  |  |  |

# Fig. 3

| Schichtdicke (mm) | Matrix: | Harz % | Füllstoff % | Roving % |
|---|---|---|---|---|
| 2 | | 50 | 50 | 35 |
| 2 | | 83,3 | 16,7 | 50 |
| 2 | | 50 | 50 | 35 |
| 2 | | 83,3 | 16,7 | 50 |
| 1,75 | | 40 | 60 | 20 |
| 1,75 | | 66,7 | 33,3 | 10 |
| 1,75 | | 40 | 60 | 20 |
| 1,75 | | 66,7 | 33,3 | 10 |

15

# Fig. 4

13

De = 225

DI = 227

# Fig. 5

| Schichtdicke (mm) | Matrix: Harz % | Füllstoff % | % Roving |
|---|---|---|---|
| 0,5 | 20 | 80 | 0 |
| 0,6 | 30 | 45 | 25 |
| 0,5 | 30 | 70 | 0 |
| 0,15 | 34 | 33 | 33 |
| 0,5 | 100 | 0 | 0 |
| 0,15 | 34 | 33 | 33 |
| 0,5 | 30 | 70 | 0 |
| 0,15 | 34 | 33 | 33 |
| 0,5 | 30 | 70 | 0 |
| 0,15 | 34 | 33 | 33 |
| 0,5 | 30 | 70 | 0 |
| 0,15 | 34 | 33 | 33 |
| 0,5 | 30 | 70 | 0 |
| 0,15 | 34 | 33 | 33 |
| 0,5 | 30 | 70 | 0 |
| 0,15 | 34 | 33 | 33 |
| 0,5 | 30 | 70 | 0 |
| 0,15 | 34 | 33 | 33 |
| 0,6 | 100 | 0 | 0 |

# Fig. 6

| Schichtdicke (mm) | Matrix: Harz % | Füllstoff % | % Roving |
|---|---|---|---|
| 0,7 | 20 | 80 | 0 |
| 1,0 | 30 | 45 | 25 |
| 0,5 | 30 | 70 | 0 |
| 0,15 | 34 | 33 | 33 |
| 0,5 | 30 | 70 | 0 |
| 0,15 | 34 | 33 | 33 |
| 0,5 | 30 | 70 | 0 |
| 0,15 | 34 | 33 | 33 |
| 0,5 | 30 | 70 | 0 |
| 0,15 | 34 | 33 | 33 |
| 0,5 | 30 | 70 | 0 |
| 0,15 | 34 | 33 | 33 |
| 0,5 | 30 | 70 | 0 |
| 0,15 | 34 | 33 | 33 |
| 0,5 | 30 | 70 | 0 |
| 0,15 | 34 | 33 | 33 |
| 0,5 | 30 | 70 | 0 |
| 0,15 | 34 | 33 | 33 |
| 0,5 | 30 | 70 | 0 |
| 0,15 | 34 | 33 | 33 |
| 0,6 | 100 | 0 | 0 |